Europäisches Patentamt

European Patent Office

Office européen des brevets

(11) Publication number: **0 181 973**
**B1**

(12) **EUROPEAN PATENT SPECIFICATION**

(45) Date of publication of patent specification: **12.10.88**

(21) Application number: **84307849.4**

(22) Date of filing: **13.11.84**

(51) Int. Cl.⁴: **E 04 B 1/74,** E 06 B 3/66,
A 01 G 9/22

(54) Replaceable foam insulation system.

(43) Date of publication of application:
**28.05.86 Bulletin 86/22**

(45) Publication of the grant of the patent:
**12.10.88 Bulletin 88/41**

(84) Designated Contracting States:
**AT BE CH DE FR GB IT LI LU NL SE**

(56) References cited:
**DE-C-1 960 745
US-A-4 074 482
US-A-4 147 002**

(73) Proprietor: **116736 (Canada) Inc.
1425 Kingsley Avenue Suite 105
Dorval Quebec (CA)**

(72) Inventor: **Nelson, Richard
1425 Kingsley Avenue
Suite 105 Dorval Quebec (CA)**

(74) Representative: **Heath, Derek James et al
Bromhead & Co. 30 Cursitor Street Chancery
Lane
London EC4A 1LT (GB)**

Courier Press, Leamington Spa, England.

### Description

This invention relates to a replaceable foam insulation system for a building structure. More specifically, there is disclosed a system for generating foam for a cavity in a wall or roof of a building structure, including the cavity formed between double glazings permitting transmission of solar energy therethrough. By the term "glazing" is meant not only glass but any flexible or rigid sheet, membrane or film material that permits the transmission of solar energy therethrough.

Many buildings and structures have large areas of glazing to permit solar heat gain and light into a building during the day. Such solar heat gain can reduce heating cost. An example of such buildings are greenhouses and the like which require both heat and light from the sun inside the building. One problem with such buildings is the loss of heat that occurs during night time, because the necessity of having transparent or translucent panels in a roof or wall of a building reduces the insulation properties of the building.

One way of overcoming this problem is to have a double glazing with a cavity between two glass or other transparent glazings. Such a system allows air to be circulated within the cavity and this can avoid loss of heat in the building. An example of such a building structure is shown in my U.S. Patent No. 4,452,230 issued June 5, 1984 which provides two layers of flexible sheets with a cavity therebetween.

It has been suggested that if the cavities between double glazings in a wall or roof be filled with foam during night time, then this foam has good insulation properties and thus greatly reduces the heat loss through the glazings during this period. Furthermore, the foam may be retained in the cavities during extremely cold days in winter.

In the past it has been difficult to fill cavities with foam for a few hours and then destroy the foam to leave the cavities completely clear. Either the foam is an almost permanent foam and is difficult to destroy, or the foam has a short life and dissolves into a liquid in a short time. Furthermore, many foams leave a deposit or a coating on the inside of the glazings enclosing the cavities. The replaceable foam for the insulation system is a dispersion of gas in a foam producing liquid.

Two types of foam producing liquids have been suggested for providing foam to fill a cavity in a wall or roof. A detergent based foam and a protein based foam. Detergent foams are not very stable and generally last less than one hour. Protein foams on the other hand have much greater stability and last for several hours, however, the problems with protein foams is that they are difficult to destroy or disperse and thus are not easily removed in the morning, when the warmth and light from the sun is required in the building.

In the past foam systems for insulating wall or roof cavities have generally included a generator outside the cavity and vents located at the extremities of the cavity so that the foam is pushed into the cavity and then flows through the cavity to the extremities where the vents are located. Generally, air flows out of vents at the extremities of the cavity, but problems often occur because these vents tend to allow foam to escape as well as air, thus a wastage of foam can occur and also a difficulty arises in disposing of any escaping foam. Furthermore, uneven flow of foam in the cavity can result in pockets of air persisting in the cavity while, at the same time, foam is escaping from the vents. Another problem that exists with foams is that when a foam is generated, it often has an uneven consistency and this can result in the foam dissolving in patches, thus forming voids in the insulation. If inadequate drainage facilities exist, then when the foam dissolves, it forms a wet foamy liquid which destroys the foam around the liquid leaving puddles or areas of collapsed foam in the cavity. This problem is more pronounced with the less stable types of foams. Also when the cavity is refilled this foamy liquid tends to remain in the same position making only partial refilling possible. Thus, in past use the first cycle of foam generation produces a high quality of insulation with subsequent regenerations and fillings of the cavities being less and less effective during the regeneration cycles required through the night.

Previous methods have not provided any good means of removing the old foam residue from the cavity before injecting new foam into a cavity. Also, since it is desirable to conserve the foam producing liquid, previous systems retained the heavy, wet, collapsed foam in the cavity until the foam could dissipate, and the resulting liquid drain away, otherwise the foam could be lost out of the vents.

The present invention provides a replaceable foam insulation system in a cavity in walls or roof of a building structure, the system comprising, at least one enclosed recirculating substantially horizontal passage defined within the cavity, means in the cavity for recirculating air or gas through the passage, and foam producing means in the passage positioned immediately downstream of the means for recirculating air or gas, the foam producing means and means for recirculating air or gas when operating together providing foam to substantially fill the passage in the cavity, and the means for recirculating air or gas when operating alone destroying substantially all the foam in the passage.

Basically the present invention provides a cavity in a wall or roof of a building structure with a recirculating enclosed passage therein so that no venting takes place from the cavity. A fan or air circulating means is provided to circulate air or gas in a substantially laminar flow within the passage, and immediately downstream of the fan is a foam generator so that foam is generated and blown from the fan around the passage. When the foam is blown around the passage and passes through the fan it is destroyed and new foam is generated from the foam generator. In this way one can constantly generate foam and circulate it around the passage. After one circulation a process of foam destruction and regeneration is established. The enclosed recirculating passage overcomes the problems of loss of foam through vents and this recirculating of air or gas and foam in a substantially laminar flow within the passage overcomes the problems of collapsing foam causing voids in the insulation.

In a preferred embodiment, the means for recirculating air or gas comprises a fan positioned in the passage, such that all air or gas in the passage recirculates through the fan, the foam producing means comprises means for delivery of a foam producing liquid upon a perforated or mesh screen positioned across the passage immediately downstream of the fan. The means of delivering foam producing liquid to the screen may be by a spray or by cascading the liquid. The fan may have at least two speeds, a first speed when used in conjunction with foam producing means and a second speed faster than the first speed when operating alone to destroy the foam. In one embodiment a liquid reservoir feed system and pump are provided to pump foam producing liquid to spray or cascade on the screen, and a drain system drains liquid from the passage back into the liquid reservoir.

In other embodiments, the passage within the cavity has a substantially rectangular cross section with an aspect ratio in the range of about 1:1 to 1:3. The recirculating passage includes two ducts side by side with connecting apertures at the two ends of the ducts. Curved deflectors are positioned in the connecting apertures at the two ends of the duct to assist in circulating foam and air or gas in the recirculating passage.

In another embodiment the means for recirculating air and the foam producing means are located in the connecting aperture at one of the two ends of the ducts or, alternatively, are located in the approximate center of one of the two ducts. In another embodiment wherein the passages are reasonably long, then at least two separate units for recirculating air and producing foam are provided, one unit located in the approximate center of each of the two ducts, or in the connecting apertures at the two ends of the ducts.

In a still further embodiment, the recirculating passage extends substantially horizontally around cavities in outside walls of the building structure, and the means for recirculating air or gas and the foam producing means comprise a plurality of separate units, the units spaced substantially evenly apart in the recirculating passage in the outside walls of the building structure. In one emodiment there may be a plurality of recirculating passages in the form of tiers one on top of the other around the building structure. In yet another embodiment the passage within the cavity has a substantially circular cross section.

The present invention also provides a process for generating foam and destroying foam in an enclosed recirculating substantially horizontal passage, comprising the steps of, positioning a fan in the passage to recirculate air or gas therein, delivering a foam producing liquid onto a mesh screen in the passage immediately downstream of the fan to produce foam, recirculating foam by means of the fan to fill the passage with foam, and stop delivering the foam producing liquid and maintain recirculating air or gas in the passage by means of the fan so substantially all the foam is destroyed as it passes through the fan. In other embodiments the foam producing liquid is a mixture of a liquid detergent concentrate and water. The fan recirculates the air or gas to provide a substantially laminar flow in the passage. In yet another emodiment foam producing liquid is sprayed through non-foam producing orifices into the passage to aid in destroying the foam and removing residues. In a still further embodiment a gas having a lower heat transfer than air is recirculated in the passage. The step of recirculating foam by means of the fan may be carried out intermittently.

In drawings which illustrate embodiments of the invention and accompany this specification,

Fig. 1 is an isometric schematic view of a building having cavities in the roof containing recirculating passages for foam.

Fig. 2 is an isometric schematic view of two roof cavities each having a recirculating passage therein containing a fan and foam generator.

Fig. 3 is a partial sectional elevation showing a fan and foam generator with a reservoir and foam producing liquid pump beneath.

Fig. 4 is an isometric schematic view of a recirculating passage in a cavity with curved deflectors at one end to assist in the circulation of air or gas and foam and a fan and foam generator at the center of one of the ducts.

Fig. 5 is an isometric schematic view of a cavity with a recirculating passage containing two ducts, each duct having a fan and foam generator at the approximate center.

Fig. 6 is an isometric schematic view of a cavity with a recirculating passage extending around the outside walls of a building.

Fig. 7 is an isometric schematic view of two roof cavities with the passages formed of substantially round tubes.

Fig. 8 is a cross sectional view of two lens shaped passages of a cavity.

Fig. 9 is an isometric schematic view of a building containing a plurality of horizontal ducts representing a single recirculating passage.

Fig. 10 is a side view of a removable screen with a different foam spray.

Fig. 11 is a front view of the screen shown in Fig. 10.

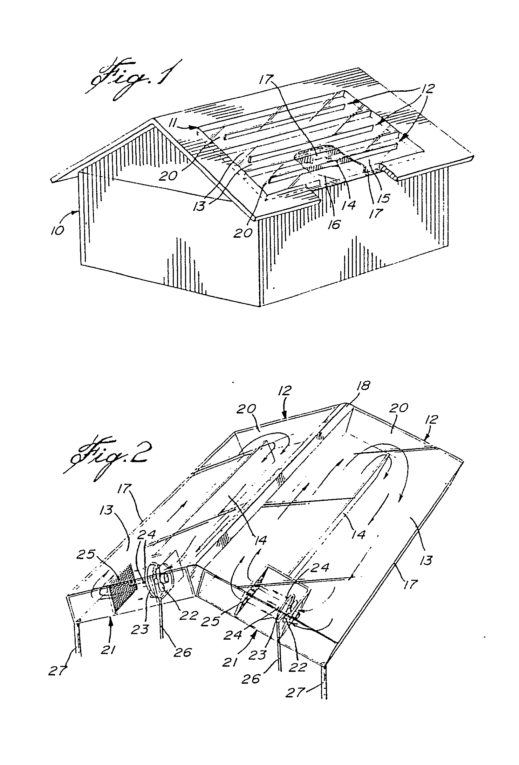

Referring now to Fig. 1, a building 10 is shown which has a double glazed sky light area 11 in a slope of the roof. The sky light area 11 comprises three separate cavities 12, each cavity having two ducts 13 which are joined together at each end to form a recirculating passage, and have a central partition 14 dividing the ducts. The flow of air or gas in the ducts 13 is substantially a horizontal flow, although the slope of the roof does require a change in elevation at the ends of the ducts.

Each duct has a top glazing 15 and a bottom glazing 16 supported by the central partition 14 and side partitions 17 which separate cavities 12 one from the other. The partitions 14, 17 may be structural members and form part of the building structure, or may be quite independent of the building structure. In one embodiment the duct has only an outside or top glazing 15.

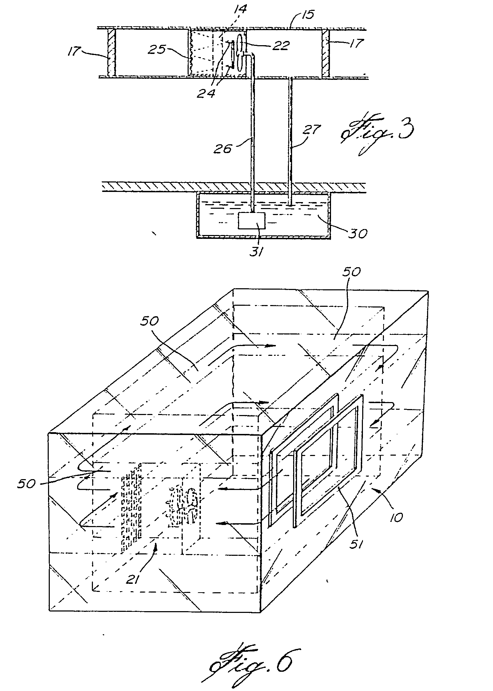

Fig. 2 illustrates two separate cavities 12 which are sloped upwards to form a peak 18. The sloped cavities 12 still allow substantially horizontal air or gas flow in the ducts 13. The sloped roof configuration conveys rain off the roof, and permits liquid in the ducts to drain to one corner making drainage a simple matter. An example of such a configuration is shown in my U.S. Patent 4,452,230 issued June 5, 1984.

The replaceable foam insulation system is disclosed in Fig. 2. Each duct 13 has a substantially rectangular cross section. The ducts have a substantially horizontal flow of air or gas transversely across the sloped roof. At one end of the ducts is a connecting aperture 20 and at the other end is a combination fan and foam generator unit 21. Arrows illustrate the recirculating flow that occurs within the two ducts 13, the aperture 20 and the generator unit 21.

The combination fan and foam generator unit 21 comprises a fan 22 and immediately downstream of the fan 22 is a ring 23 having spray nozzles 24 therein, the spray nozzles direct spray onto a wire mesh or perforated screen 25 which extends across the cross sectional area of the aperture so that all the circulating air or gas and foam recirculating in the passage must pass through the fan 22 and the wire mesh screen 25. A feed line 26 feeds foam producing liquid to the spray nozzles 24. Drain lines 27 shown at the lowest corners of the ducts 13 drain any liquid from the ducts into a reservoir (not shown). Typically, the fan 22 is a multi-vane tube axial type. The vanes are provided with pitch adjustment so that the velocity and/or flow rate can be set. In another embodiment a two speed fan can be provided, one speed being the higher speed for blowing air or gas through the ducts 13 and the second speed being a slower speed used for the generation of foam. The flow of both air or gas and foam in the ducts 13 is substantially horizontal. If the flow is vertical then it is often found that foam is not distributed evenly throughout the passage 12, furthermore, the foam structure at the bottom may be destroyed from the weight of the head of foam in a vertical passage.

The spray nozzles shown in the figures may be replaced by a cascade or curtain of foam producing liquid down the screen 25, which may be a fibrous screen or a spongy porous screen that holds the liquid. The screen remains wet during the time that foam is being produced and air or gas is blown through the screen from the fan forming foam bubbles on the downstream side of the screen which leave the screen and are forced through the ducts 13. The replaceable foam for the insulation system is a dispersion of air or gas in a foam producing liquid.

The enclosed recirculating passage preferably contains air, however, it is a sealed circuit and the air always remains in the system. The air can be replaced with a gas, preferably one which has lower heat transfer properties than air, such as argon or carbon dioxide. Such a gas improves the insulating properties of the roof or wall of the building structure.

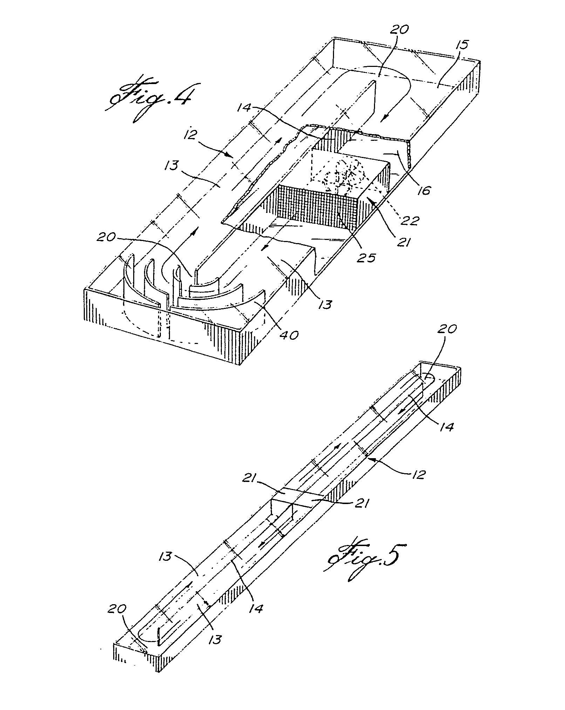

The type of foam preferred for use in the present invention is a detergent based foam in foam producing liquid form, stored in a reservoir 30, as shown in Fig. 3. The reservoir 30 is preferably kept beneath the floor of the building, and a high pressure pump 31 pumps the foam producing liquid through the feed pipe 26 to nozzles 24. The drain line 27 allows the liquid produced from the collapsed foam to drain into the reservoir 30 for regeneration.

A typical detergent based foam concentrate is sodium lauryl sulfate which is a fatty acid foam, alternatively, a fluoro-chemical foam concentrate may be used. A preferred foam producing liquid is 3% by weight sodium lauryl sulfate concentrate and 97% by weight water. In operation, the pump 31 pumps the foam producing liquid to deliver the foam producing liquid to continuously wet the screen 25. The fan 22 blows foam which is produced on the downstream side of the screen 25 into the first duct 13 pushing the air in front of the foam so the foam slowly takes up the space of the first duct 13 then flows through the aperture 20 and fills up the second duct 13 so the complete recirculating passage is filled with foam. As the foam is continuously generated it eventually completes the circuit and then passes through the fan 22. The fan breaks up the foam immediately and any liquid produced from the collapsed foam drains back to the reservoir 30. If there is a gradual degeneration of the foam in the ducts 13 then liquid produced from the collapsed foam also drains back to the reservoir 30.

It is found that the foam generally lasts for one to two hours before collapsing, thus the flow speed of the foam in the recirculating passage is preferably set so that a complete circuit of the foam takes less than the life of the foam. The foam generation occurs all the time the passage is to be filled with foam to avoid the foam collapsing in some areas, and if collapsing does occur the voids are filled up by new foam being generated and pushed through the passage. In some instances, if the anticipated life of the foam is longer than the time required to fill the passage, then the fan and foam generator operate together on an intermittent time cycle. During the operating periods, the foam is generated and flows to make at least one complete recirculation so as to ensure all the foam in the passage is renewed. Between operating cycles, the foam is stationary in the passage. The time duration between operating cycles is sufficiently short to ensure the foam does not collapse to form voids in the passage. This duration is dependent upon the stability of the particular foam used in the system.

To destroy the foam in the system, the foam producing liquid and water being delivered to the screen 25 is turned off. The fan destroys the foam, and any liquid is allowed to drain away. The fan then forces air or gas into the first duct 13 and around the passage 12 forcing the foam around the circuit and through the fan 24 where it is destroyed. To assist in this destruction of foam, foam producing liquid may be sprayed through non-foam orifices preferably provided in the ducts 13 to destroy foam remaining in the ducts and to wash away any deposits left by the collapsed foam. The destroyed foam turns to liquid and drains away through drain lines 27. When foam is required in the passage, the fan is started and foam producing liquid is delivered to the screen 25. In the destruction of foam, a higher volume of air is preferably circulated in the passage 12. This is achieved by increasing fan speed or, alternatively, by a variable pitch vane on the fan to vary the air flow therethrough.

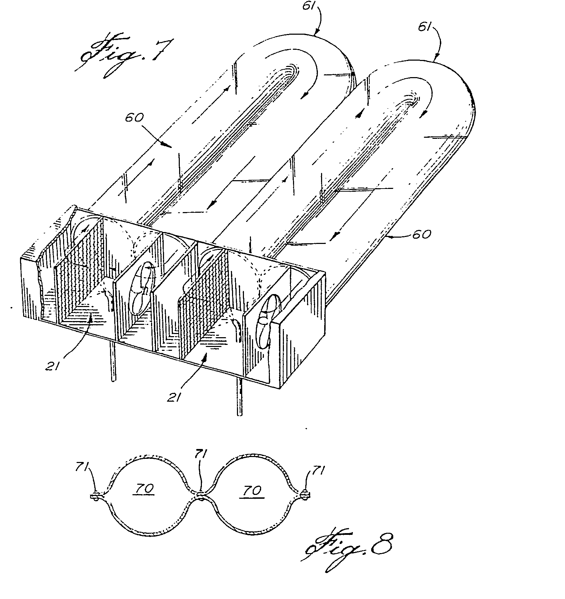

An example of a passage 12 with two ducts 13 is illustrated in Fig. 4. Both ducts 13 are on substantially the same plane. The fan and foam generator unit 21 is positioned in the center of one duct 14 with special curved deflectors 40 at each end in connecting apertures 20 in the center partition 14. The deflectors 40 provide a laminar flow for the air or gas and foam flowing through the apertures 20. Turning vanes and other devices may also be used to provide a smooth non turbulent flow for the change of direction. The sides of the ducts 13 are preferably formed of slippery surfaces or have finishes on the insides to allow easy movement of the foam, and the foams themselves preferably exhibit low adhesion and cohesion. The flow, both air or gas flow and foam flow, in the ducts 13 is preferably laminar flow with a minimum of turbulence at the surfaces of the ducts.

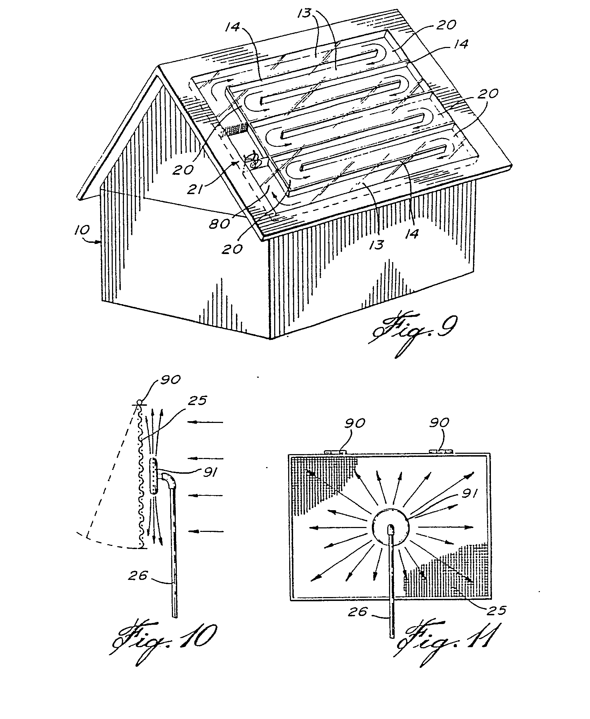

Fig. 5 illustrates a further embodiment having extra long ducts with two fan and foam generator units 21 located at the centers of each duct. Whereas the units 21 are shown in the center of each duct, they could also be provided at the ends of the ducts depending upon the building structure.

A building structure 10 is shown in Fig. 6 with a cavity in the form of a horizontal enclosed passage 50 extending completely around the walls. The passage 50 has windows 51 on one or more sides which are double glazed and allow foam to fill the passage 50 and the windows 51 to insulate the walls and window areas. In another embodiment the passage 50 is the cavity between the glazings which extends completely around the walls of the building structure. A fan and foam generator unit 21 is shown positioned in one wall of the passage. If the building is large, several units 21 may be provided in the passage.

In another embodiment of wall cavities, the passages 50 may be formed in tiers, one on top of the other. This allows foam to be kept in all but one tier on cold days. Furthermore, tiers avoid high passages and allows the aspect ratio of the cross section of the passages to be kept in the preferred range of 1:1 to 1:3. The dimensions of the passage or duct are such that the height of the duct does not have a head of foam therein sufficient to cause the foam at the bottom to collapse. The weight of the foam must not compress the lower portion of foam so as to leave voids at the top of the passage. Each passage preferably has guides at the corners to ensure laminar flow throughout the passage.

Another embodiment of the system is illustrated in Fig. 7 where the passages 60 are formed of round ducts, preferably a clear plastic film tube. The ducts touch each other and are preferably stuck together to ensure there is no leakage. A U-turn portion 61 is provided at the ends of the duct, providing laminar flow, and the open ends of the duct are attached to a fan and foam generator unit 21. In another embodiment shown in Fig. 8 the ducts 70 are formed from a flexible film joined at three positions 71 to provide a lens shaped cross section. Such a system allows a great many ducts 70 to be made out of two film sheets. In the system shown in both Figs. 7 and 8 a positive pressure is desired in the ducts.

Whereas most embodiments show just two horizontal ducts forming the passage, several ducts may be provided as shown in Fig. 9. The building 10 has eight ducts 13, divided by partitions 14 which have apertures 20 at one end staggered from duct to duct so that the flow of air or gas starts at the first duct at the top of the roof, and flows horizontally down to the last duct. The air or gas then enters a passage 80 which has the same slope as the roof and contains the combination fan and foam generation unit 21. The passage 80 leads to the first duct 13 of the passage.

Whereas a two speed fan may be utilized to provide an increased flow of air or gas to remove foam, in another embodiment, as illustrated in Figs. 10 or 11, the screen 25 has hinges 90 so it may be swung out of the passage when the foam is being destroyed. By removing the screen which acts as a flow restrictor, more air or gas flows in the passage, and this avoids the necessity of using a two speed fan.

Another embodiment of a spray system is shown in Figs. 10 and 11 which includes a spray nozzle 91 positioned up stream of the screen 25 but adjacent the screen 25 rather than the fan. The spray nozzle 91 is connected to the feed line 26 and has holes around the periphery which sprays the foam producing liquid in a plane parallel to the face of the screen.

It has been found that the system of the present invention is applicable to portable buildings, because the foam can easily be generated and destroyed thus avoiding the necessity of carrying insulation in batts or sheets. In portable buildings there is no need to have the cavities with glazings on one side. Portable buildings with non-transparent walls with cavities inbetween can benefit from improved insulation with the foam system of the present invention, and retain their portability.

Structural elements of the building may be incorporated into the cavity system. The partitions 14 and 17 may be structural members of the building. The panels may be formed of glass, membrane, film or plastic sheet, either transparent or translucent. Manifolds may be incorporated at each end wherein the air or gas circulating within the duct is heated, cooled or humidified, as required.

Various changes may be made to the scope of the present invention which is limited only by the following claims.

## Claims

1. A replaceable foam insulation system in a cavity (12) in walls or a roof of a building structure (10), characterized by:

(a) at least one enclosed, recirculating, substantially horizontal passage (13) defined within the cavity (12);

(b) means (22) in the cavity (12) for recirculating air or gas through the passage (13); and

(c) foam producing means (23, 24) in the passage (13) positioned immediately downstream of the means (22) for recirculating air or gas, the foam producing means (23, 24) and means (22) for recirculating air or gas when operating together providing foam to substantially fill the passage (13) in the cavity (12), and the means (22) for recirculating air or gas, when operating alone, destroying substantially all the foam in the passage (13).

2. A system according to claim 1, characterized in that the means (22) for recirculating air or gas comprises a fan positioned in the passage (13) such that air or gas in the passage recirculates through the fan, and that the foam producing means (23, 24) comprises means for delivery of a foam producing liquid upon a perforated or mesh screen (25) positioned across the passage (13) immediately downstream of the fan (22).

3. A system according to claim 2, characterized in that the means (23, 24) for delivery of a foam producing liquid comprises at least one spray nozzle (24) with means (31) for pumping foam producing liquid through the spray nozzle.

4. A system according to claim 2, characterized in that the means for delivery of a foam producing liquid comprises a means for cascading the foam producing liquid down the screen (25).

5. A system according to any one of claims 2—4, characterized in that the fan (22) has at least two speeds, a first speed when used in conjunction with the foam producing means (23, 24), and a second speed, faster than the first speed, when operating alone to destroy the foam.

6. A system according to any one of claims 1—5, characterized in that the passage (13) within the cavity (12) has a substantially rectangular cross-section with an aspect ratio in the range of about 1:1 to 1:3.

7. A system according to claim 3, characterized by a liquid reservoir (30), a feed system (26) and a pump (31) serving to pump foam producing liquid through at least one spray nozzle (24), and a drain system (27) to drain liquid from the passage (13) back into the liquid reservoir (30).

8. A system according to any one of claims 1—7, characterized in that the recirculating passage (13) includes two ducts, side by side, with connecting apertures (20) at the two ends of the ducts.

9. A system according to claim 8, characterized in that curved deflectors (40) are positioned in the connecting apertures (20) at the two ends of the ducts (13) to assist in circulating foam and air or gas in the recirculating passage.

10. A system according to claim 8, characterized in that the means (22) for recirculating air or gas and the foam producing means (23, 24) are located in the connecting aperture (20) at one of the two ends of the ducts (13).

11. A system according to claim 8, characterized in that the means (22) for recirculating air or gas and the foam producing means (23, 24) are located in the approximate centre of one of the two ducts (13).

12. A system according to claim 8, characterized in that the means (22) for recirculating air or gas and the foam producing means (23, 24) comprise at least two separate units, each unit spaced substantially equally apart in the recirculating passage (13).

13. A system according to any one of claims 1—12, characterized in that the recirculating passage (13) extends substantially horizontally around cavities (12) in outside walls of the building structure (10).

14. A system according to claim 13, characterized in that a plurality of recirculating passages (50) in the form of tiers one on top of the other extend substantially horizontally around the building structure (10).

15. A system according to claim 14, characterized in that the means (22) for recirculating air or gas and the foam producing means (23, 24) in each of the recirculating passages comprise a plurality of separate units spaced substantially evenly apart in each of the recirculating passages in the building structure (10).

16. A system according to claim 2, characterized in that the passage (13) within the cavity (12) has a substantially circular cross-section.

17. A system according to any one of claims 1—16, characterized in that the cavity has an outside glazing (15).

18. A system according to any one of claims 1—17, characterized in that the cavity has an outside glazing (15) and an inside glazing (16).

19. A system according to claim 2, characterized in that the mesh screen (25) can be removed from the passage (13) when the means (22) for recirculating air or gas is operating alone.

20. A system according to any one of claims 1—19, characterized in that the recirculating passage (13) includes a plurality of horizontal ducts, each duct having a connecting aperture to the adjacent duct, and that the means (22) for recirculating air or gas and the foam producing means (23, 24) are positioned in a passage leading from the last duct to the first duct.

21. A process for generating foam and destroying foam in an enclosed, recirculating, substantially horizontal passage (13), characterized by:

(a) positioning a fan (22) in the passage (13) to recirculate air or gas therein;

(b) delivering a foam producing liquid onto a mesh screen (25) in the passage immediately downstream of the fan (22) to produce foam;

(c) recirculating foam by means of the fan (22) to fill the passage with the foam; and

(d) stopping delivery of the foam producing liquid and maintaining recirculating air or gas in the passage (13) by means of the fan (22) so that substantially all the foam is destroyed as it passes through the fan.

22. A process according to claim 21, characterized in that the foam producing liquid is a mixture of a liquid detergent concentrate and water.

23. A process according to claim 21 or claim 22, characterized in that the fan (22) recirculates air or gas to provide a substantially laminar flow in the passage.

24. A process according to any one of claims 21—23, characterized in that it includes spraying foam producing liquid through non-foam producing orifices into the passage (13) to aid in destroying the foam and removing residues.

25. A process according to any one of claims 21—24, characterized in that a gas having a lower heat transfer than air is recirculated in the passage.

26. A process according to any one of claims 21—25, characterized in that the step of recirculating foam by means of the fan (22) is carried out intermittently.

**Patentansprüche**

1. Ersetzbares Schaumisolationssystem in einem Hohlraum (12) in Wänden oder einem Dach eines Gebäudeaufbaus (10), gekennzeichnet durch

(a) wenigstens einen eingeschlossenen, umlaufenden, im wesentlichen horizontalen Kanal (13), der innerhalb des Hohlraums (12) gebildet ist;

(b) eine Einrichtung (22) in dem Hohlraum (12) für das Umwälzen von Luft oder Gas durch den Kanal (13); und

(c) eine schaumerzeugende Einrichtung (23, 24) in dem Kanal (13), die unmittelbar stromabwärts von der Einrichtung (22) für das Umwälzen von Luft oder Gas angeordnet ist, wobei die schaumerzeugende Einrichtung (23, 24) und die Einrichtung (22) für das Umwälzen von Luft oder Gas beim gemeinsamen Betrieb Schaum schaffen, um den Kanal (13) in dem Hohlraum (12) im wesentlichen zu füllen, und wobei die Einrichtung (22) für das Umwälzen von Luft oder Gas bei alleinigem Betrieb im wesentlichen den gesamten Schaum in dem Kanal (13) zerstört.

2. System nach Anspruch 1, dadurch gekennzeichnet, daß die Einrichtung (22) für das Umwälzen von Luft oder Gas einen Ventilator aufweist, der in dem Kanal (13) derart angeordnet ist, daß Luft oder Gas in dem Kanal durch den Ventilator umläuft, und daß die schaumerzeugende Einrichtung (23, 24) eine Einrichtung für das Zuführen einer schaumbildenden Flüssigkeit auf ein perforiertes oder maschenaufweisendes Sieb (25) aufweist, das quer über den Kanal (13) unmittelbar stromabwärts von dem Ventilator (22) angeordnet ist.

3. System nach Anspruch 2, dadurch gekennzeichnet, daß die Einrichtung (23, 24) für das Zuführen einer schaumbildenden Flüssigkeit wenigstens eine Spraydüse (24) mit einer Einrichtung (31) für das Pumpen von schaumerzeugender Flüssigkeit durch die Spraydüse aufweist.

4. System nach Anspruch 2, dadurch gekennzeichnet, daß die Einrichtung für das Zuführen einer schaumerzeugenden Flüssigkeit eine Einrichtung für das mehrstufige Herabfallen der schaumbildenden Flüssigkeit auf das Sieb (25) aufweist.

5. System nach einem der Ansprüche 2 bis 4, dadurch gekennzeichnet, daß der Ventilator (22) wenigstens zwei Geschwindigkeiten besitzt, eine erste Geschwindigkeit, die im Zusammenhang mit der schaumerzeugenden Einrichtung (23, 24) verwendet wird, und eine zweite Geschwindigkeit, die schneller als die erste Geschwindigkeit ist, wenn ein alleiniger Betrieb für das Zerstören des Schaums erfolgt.

6. System nach einem der Ansprüche 1 bis 5, dadurch gekennzeichnet, daß der Kanal (13) innerhalb des Hohlraums (12) einen im wesentlichen rechteckigen Querschnitt mit einem Seitenverhältnis im Bereich von etwa 1:1 bis 1:3 aufweist.

7. System nach Anspruch 3, gekennzeichnet durch einen Flüssigkeitsbehälter (30), ein Zuführsystem (26) und eine Pumpe (31), die für das Pumpen der schaumbildenden Flüssigkeit durch wenigstens eine Spraydüse (24) dient, und durch ein Drainagesystem (27) für das Abführen von Flüssigkeit aus dem Kanal (13) zurück in den Flüssigkeitsbehälter (30).

8. System nach einem der Ansprüche 1 bis 7, dadurch gekennzeichnet, daß der Umlaufkanal (13) zwei nebeneinander angeordnete Leitungen mit Verbindungsöffnungen (20) an den beiden Ende der Leitungen aufweist.

9. System nach Anspruch 8, dadurch gekennzeichnet, daß gekrümmte Ablenkelemente (40) in den verbindenden Öffnungen (20) an den beiden Enden der Leitungen (13) für die Unterstützung der Umwälzung von Schaum und Luft oder Gas in dem Umlaufkanal angeordnet sind.

10. System nach Anspruch 8, dadurch gekennzeichnet, daß die Einrichtung (22) für das Umwälzen von Luft oder Gas und die schaumbildende Einrichtung (23, 24) in der verbindenden Öffnung (20) an einem der beiden Enden der Leitungen (13) angeordnet sind.

11. System nach Anspruch 8, dadurch gekennzeichnet, daß die Einrichtung (22) für das Umwälzen von Luft oder Gas und die schaumerzeugende Einrichtung (23, 24) in der annähernden Mitte einer der beiden Leitungen (13) angeordnet sind.

12. System nach Anspruch 8, dadurch gekennzeichnet, daß die Einrichtung (22) für das Umwälzen von Luft oder Gas und die schaumerzeugende Einrichtung (23, 24) wenigstens zwei separate Einheiten aufweisen, wobei jede Einheit in dem Umlaufkanal (13) im wesentlichen gleich von den anderen beabstandet ist.

13. System nach einem der Ansprüche 1 bis 12, dadurch gekennzeichnet, daß der Umlaufkanal (13) sich im wesentlichen horizontal um Hohlräume (12) in Außenwänden des Gebäudeaufbaus (10) erstreckt.

14. System nach Anspruch 13, dadurch gekennzeichnet, daß sich eine Vielzahl von Umlaufkanälen (50) aufeinander geschichtet im wesentlichen horizontal um den Gebäudeaufbau (10) erstrecken.

15. System nach Anspruch 14, dadurch gekennzeichnet, daß die Einrichtung (22) für das Umwälzen von Luft oder Gas und die schaumerzeugende Einrichtung (23, 24) in jedem der Umlaufkanäle eine Vielzahl von separaten Einheiten aufweist, die im wesentlichen gleichmäßig voneinander in jedem der Umläufkanäle in dem Gebäudeaufbau (10) beabstandet sind.

16. System nach Anspruch 2, dadurch gekennzeichnet, daß der Kanal (13) innerhalb des Hohlraums (12) einen im wesentlichen kreisförmigen Querschnitt aufweist.

17. System nach einem der Ansprüche 1 bis 16, dadurch gekennzeichnet, daß der Hohlraum eine Außenverglasung (15) aufweist.

18. System nach einem der Ansprüche 1 bis 17, dadurch gekennzeichnet, daß der Hohlraum eine Außenverglasung (15) und eine Innenverglasung (16) aufweist.

19. System nach Anspruch 2, dadurch gekennzeichnet, daß das Maschensieb (25) aus dem Kanal (13) entfernbar ist, wenn die Einrichtung (22) für das Umwälzen von Luft oder Gas allein betrieben wird.

20. System nach einem der Ansprüche 1 bis 19, dadurch gekennzeichnet, daß der Umlaufkanal (13) eine Vielzahl von horizontalen Leitungen aufweist, wobei jede Leitung eine Verbindungsöffnung zu der angrenzenden Leitung besitzt, und daß die Einrichtung (22) für das Umwälzen von Luft oder Gas und die schaumerzeugende Einrichtung (23, 24) in einem Kanal angeordnet sind, der von der letzten Leitung zu der ersten Leitung führt.

21. Verfahren zur Erzeugung und Zerstörung von Schaum in einem geschlossenen, umlaufenden, im wesentlichen horizontalen Kanal (13), gekennzeichnet durch:

(a) Positionieren eines Ventilators (22) in den Kanal (13) für das Umwälzen von Luft oder Gas in diesen;

(b) Zuführen einer schaumbildenden Flüssigkeit auf ein Maschensieb (25) in dem Kanal unmittelbar stromabwärts von dem Ventilator (22), um Schaum zu erzeugen;

(c) Umwälzen von Schaum mittels des Ventilators (22), um den Kanal mit dem Schaum zu füllen; und

(d) Beenden der Zuführung der schaumbildenden Flüssigkeit und Beibehalten des Umwälzens von Luft oder Gas in dem Kanal (13) mittels des Ventilators (22) derart, daß im wesentlichen der gesamte Schaum zerstört wird, wenn er durch den Ventilator tritt.

22. Verfahren nach Anspruch 21, dadurch gekennzeichnet, daß die schaumbildende Flüssigkeit eine Mischung aus einem flüssigen Detergenskonzentrat und Wasser ist.

23. Verfahren nach Anspruch 21 oder 22, dadurch gekennzeichnet, daß der Ventilator (22) Luft oder Gas umwälzt, um eine im wesentlichen laminare Strömung in dem Kanal zu schaffen.

24. Verfahren nach einem der Ansprüche 21 bis 23, dadurch gekennzeichnet, daß schaumbildende Flüssigkeit durch nichtschaumbildende Öffnungen in den Kanal (13) gesprayt wird, um das Zerstören des Schaums und das Entfernen von Rückständen zu unterstützen.

25. Verfahren nach einem der Ansprüche 21 bis 24, dadurch gekennzeichnet, daß ein Gas in dem Kanal umgewälzt wird, das eine niedrigere Wärmeübertragungseigenschaft als Luft besitzt.

26. Verfahren nach einem der Ansprüche 21 bis 25, dadurch gekennzeichnet, daß der Verfahrensschritt des Umwälzens von Schaum mittels des Ventilators (22) intermittierend durchgeführt wird.

**Revendications**

1. Système isolant en mousse remplaçable placé dans une cavité (12) ménagée dans des murs ou un toit d'une structure (10) d'un bâtiment, caractérisé par:

(a) au moins un passage fermé, sensiblement horizontal, de recirculation (13) défini à l'intérieur de la cavité (12);

(b) des moyens (22) situés dans la cavité (12) pour faire recirculer l'air ou le gaz dans le passage (13); et

(c) des moyens (23, 24) de production d'une mousse disposés dans le passage (13) directement en aval des moyens (22) de recirculation de l'air ou du gaz, les moyens (23, 24) de production de la mousse et les moyens (22) de recirculation de l'air ou du gaz produisant, lorsqu'ils fonctionnent ensemble, une mousse destinée à remplir substantiellement le passage (13) situé dans la cavité (12), et les moyens (22) de recirculation de l'air ou du gaz détruisant, lorsqu'ils fonctionnent seuls, sensiblement toute la mousse située dans le passage (13).

2. Système selon la revendication 1, caractérisé en ce que les moyens (22) de recirculation de l'air ou du gaz comprennent un ventilateur installé dans le passage (13) de sorte que l'air ou le gaz présent dans le passage est mis en recirculation dans le ventilateur, et que les moyens (23, 24) de production de la mousse comprennent des moyens pour envoyer un liquide de formation de la mousse sur un écran perforé ou un tamis (25) disposé en travers du passage (13), directement en aval du ventilateur (22).

3. Système selon la revendication 2, caractérisé en ce que les moyens (23, 24) servant à délivrer un liquide produisant de la mousse comprennent au moins une buse de pulvérisation (24) comportant des moyens (31) servant à entraîner par pompage le liquide produisant la mousse, à travers la buse de pulvérisation.

4. Système selon la revendication 2, caractérisé en ce que les moyens servant à délivrer un liquide produisant la mousse comprennent des moyens pour faire couler en cascade le liquide produisant la mousse le long de l'écran (25).

5. Système selon l'une quelconque des revendications 2—4, caractérisé en ce que le ventilateur (22) possède au moins deux vitesses, une première vitesse lorsqu'il est utilisé en liaison avec les moyens (23, 24) de production de la mousse, et une seconde vitesse supérieure à la première vitesse lorsqu'il fonctionne seul pour détruire la mousse.

6. Système selon l'une quelconque des revendications 1—5, caractérisé en ce que le passage (13) situé dans la cavité (12) possède une section transversale sensiblement rectangulaire avec un taux d'élancement dans la gamme comprise entre environ 1:1 et 1:3.

7. Système selon la revendication 3, caractérisé par un réservoir de liquide (30), un système d'alimentation (26) et une pompe (31) servant à entraîner par pompage le liquide produisant la mousse à travers au moins une buse de pulvérisation (24), et un système de vidange (27) servant à faire refluer le liquide depuis le passage (13) dans le réservoir de liquide (30).

8. Système selon l'une quelconque des revendications 1—7, caractérisé en ce que le passage de recirculation (13) comprend deux conduits disposés côte-à-côte et possédant des ouvertures de raccordement (20) situées au niveau de leurs deux extrémités.

9. Système selon la revendication 8, caractérisé en ce que des chicanes courbes (40) sont disposées dans les ouvertures de raccordement (20) au niveau des deux extrémités des conduits (13) de manière à faciliter la circulation de la mousse et de l'air et du gaz dans le passage de recirculation.

10. Système selon la revendication 8, caractérisé en ce que les moyens (22) de recirculation de l'air ou du gaz et les moyens (23, 24) de production de la mousse sont situés dans l'ouverture de raccordement (20) à l'une des deux extrémités du conduit.

11. Système selon la revendication 8, caractérisé en ce que les moyens (22) de recirculation de l'air ou du gaz et les moyens (23, 24) de production de la mousse sont situés approximativement au centre de l'un des deux conduits (13).

12. Système selon la revendication 8, caractérisé en ce que les moyens (22) de recirculation de l'air ou du gaz et les moyens (23, 24) de production de la mousse comprennent au moins deux unités séparées, qui sont toutes deux espacées de façon sensiblement identique dans le passage de recirculation (13).

13. Système selon l'une quelconque des revendications 1—12, caractérisé en ce que le passage de recirculation (13) s'étend sensiblement horizontalement autour de cavités (12) ménagées dans les murs extérieurs de la structure (10) du bâtiment.

14. Système selon la revendication 13, caractérisé en ce qu'une pluralité de passages de recirculation (50) se présentant sous la forme d'étages superposés s'étendent sensiblement horizontalement autour de la structure (10) du bâtiment.

15. Système selon la revendication 14, caractérisé en ce que les moyens (22) de recirculation de l'air ou du gaz et les moyens (23, 24) de production de la mousse situés dans chacun des passages de recirculation comprennent une pluralité d'unités séparées, placées sensiblement de façon uniforme dans chacun des passages de recirculation dans la structure (10) du bâtiment.

16. Système selon la revendication 2, caractérisé en ce que le passage (13) situé dans la cavité (12) possède une section transversale sensiblement circulaire.

17. Système selon l'une quelconque des revendications 1—17, caractérisé en ce que la cavité possède un vitrage extérieur (15).

18. Système selon l'une quelconque des revendications 1—17, caractérisé en ce que la cavité possède un vitrage extérieur (15) et un vitrage intérieur (17).

19. Système selon la revendication 2, caractérisé en ce que le tamis (25) peut être retiré du passage (13) lorsque les moyens (22) de recirculation de l'air ou du gaz fonctionnent seuls.

20. Système selon l'une quelconque des revendications 1—19, caractérisé en ce que le passage de recirculation (13) comporte une pluralité de conduits horizontaux, dont chacun possède une ouverture de raccordement à un conduit voisin, et que les moyens (22) de recirculation de l'air ou du gaz et les moyens (23, 24) de production de la mousse sont disposés dans un passage reliant le dernier conduit au premier conduit.

21. Procédé pour produire une mousse et détruire une mousse dans un passage fermé, sensiblement horizontal, de recirculation (13), caractérisé en ce qu'il consiste à:

(a) mettre en place un ventilateur (22) dans le passage (13) pour faire recirculer de l'air ou un gaz dans le passage;

(b) envoyer un liquide produisant une mousse sur un tamis (25) situé directement en aval du ventilateur (22) dans le passage pour produire une mousse;

(c) faire recirculer la mousse à l'aide du ventilateur (22) pour remplir le passage avec la mousse; et

(d) arrêter l'envoi du liquide produisant la mousse et maintenir la recirculation de l'air ou du gaz dans le passage (13) à l'aide du ventilateur (22) de sorte que sensiblement toute la mousse est détruite lorsqu'elle passe dans le

ventilateur.

22. Procédé selon la revendication 21, caractérisé en ce que le liquide produisant la mousse est un mélange d'un concentré de détergent liquide et d'eau.

23. Procédé selon la revendication 21 ou 22, caractérisé en ce que le ventilateur (22) fait recirculer l'air ou le gaz de manière à produire un écoulement sensiblement laminaire dans le passage.

24. Procédé selon l'une quelconque des revendications 21—23, caractérisé en ce qu'il inclut la pulvérisation du liquide produisant la mousse, au moyen d'orifices ne formant pas de mousse, dans le passage (13) de manière à faciliter la destruction de la mousse et l'élimination de résidus.

25. Procédé selon l'une quelconque des revendications 21—24, caractérisé en ce qu'on fait recirculer dans le passage un gaz réalisant un transfert thermique plus faible que l'air.

26. Procédé selon l'une quelconque des revendications 21—25, caractérisé en ce que l'étape de recirculation de la mousse à l'aide du ventilateur (22) est exécutée de façon intermittente.

0 181 973

Fig.1

Fig.2

1

*Fig. 3*

*Fig. 6*

Fig.4

Fig.5

*Fig.7*

*Fig.8*

Fig. 9

Fig. 10

Fig. 11